# EUROPÄISCHE PATENTSCHRIFT

(11) **EP 0 656 397 B1**
(45) Veröffentlichungstag und Bekanntmachung des Hinweises auf die Patenterteilung: **29.07.1998**
(21) Anmeldenummer: 94118398.0
(22) Anmeldetag: 23.11.1994
(51) Int. Cl.: C08L 75/04, C08L 67/02

(54) **Temperaturbeständige, hochelastische, abriebfeste Polyurethan-Polyester-Triblockpolyadditionsprodukte, ein Verfahren zu ihrer Herstellung und ihre Verwendung**
Temperatureresistant, highly elastic, abrasion-resistant polyurethane-polyester-tri-block addition products, a process for their preparation and their use
Produits d'addition polyuréthane-polyester triséquencés résistant à la température et à l'abrasion, hautement élastiques, un procédé pour leur préparation et leur utilisation

(30) Priorität: 02.12.1993 DE 4341077
(43) Veröffentlichungstag der Anmeldung: 07.06.1995
(73) Patentinhaber: Elastogran GmbH, D-49440 Lemförde (DE)
(72) Erfinder: Prissok, Frank, Dr., D-49448 Lemfoerde (DE); Lehrich, Friedhelm, Dr., D-49448 Lemfoerde (DE); Bittner, Gerhard, Dr., D-49356 Diepholz (DE); Braun, Frank, Dr., D-67063 Ludwigshafen (DE)
(74) Vertreter: Wicke, Reinhard, Dr.

(56) Entgegenhaltungen:
- EP-A- 0 013 461
- EP-A- 0 167 889
- EP-A- 0 334 186
- WO-A-91/15530
- WO-A-93/22383
- DE-A- 4 128 274
- US-A- 4 165 307
- CHEMICAL ABSTRACTS, vol. 91, no. 16, Oktober 1979, Columbus, Ohio, US; abstract no. 124490h, YONETANI ET AL 'MODIFIED POLYESTERS' Seite 39 ;Spalte 2 ; & JP-A-54 060 395 (TORAY INDUSTRIES)

## Beschreibung

Thermoplastische Polymermischungen aus mindestens einem PES, wie z.B. einem aromatischen Polycarbonat oder Polyalkylenterephthalat, und einem TPU sind bekannt. Derartige Polymermischungen aus mindestens 2 völlig ausreagierten thermoplastischen Kunststoffen, wie z.B. (Co)polymeren, Polykondensations- oder Polyadditionsprodukten, die üblicherweise als trockenes Granulat bei Raumtemperatur gemischt und danach durch Kneten oder Extrudieren bei erhöhten Temperaturen, z.B. bei 180 bis 250 °C, konfektioniert werden, bezeichnet man auch als Blend. In Blends liegen die einzelnen verwendeten thermoplastischen Kunststoffe in eigenen Phasen getrennt vor, ohne daß eine chemische Bindung besteht. Bei ausreichend großen Polaritätsunterschieden zwischen den einzelnen Kunststoffphasen können diese mit geeigneten Lösungsmitteln wieder aus dem Blend herausgelöst werden.

Im Gegensatz hierzu bestehen Blockcopolymere, Polyadditionsprodukte, wie z.B. TPU, oder Polykondensationsprodukte, wie z.B. Polyetheramide aus unterschiedlichen, durch eine chemische Bindung verknüpften Segmenten oder Phasen. TPU besteht z.B. aus einer Weichphase aus höhermolekularen Polyhydroxylverbindungen, z.B. aus Polyester- oder Polyethersegmenten, und einer Hartphase aus Urethangruppen, gebildet aus niedermolekularen Kettenverlängerungsmitteln und Polyisocyanaten. In analoger Weise enthalten Polyetheramide eine Polyether-Weichphase und eine Polyamid-Hartphase.

TPU werden üblicherweise durch Reaktion einer vorgefertigten, höhermolekularen, im wesentlichen linearen Polyhydroxylverbindung mit einem organischen Diisocyanat und einem niedermolekularen Kettenverlängerungsmittel nach dem sogenannten one-shot- oder Prepolymer-Verfahren in einer geeigneten Vorrichtung hergestellt. Je nach chemischer Struktur und Reaktivität der verwendeten Ausgangsstoffe, der angewandten Reaktionstemperatur und der davon abhängigen Reaktionsgeschwindigkeit können TPU mit einer mehr oder weniger stark ausgeprägten blockweisen Bindung der Weichund Hart segmente erhalten werden. Eine gut ausgebildete Blockstruktur bewirkt bei TPU u.a. eine hohe Elastizität. Wird die Blockstruktur beispielsweise durch zu hohe Reaktionstemperaturen oder zu lange Reaktionszeiten negativ beeinflußt, so führt dies zu einem drastischen Abfall der mechanischen Eigenschaften des TPU.

PES-TPU-Blends sind, wie bereits dargelegt wurde, bekannt. Nach Angaben der DE-A-26 46 947 (GB-A 1 513 197) werden durch innige Mischung von 50 bis 25 Gew.-Teilen Polybutylenterephthalat und 50 bis 75 Gew.-Teilen TPU Polymerabmischungen mit ausgezeichneter Flexibilität bei niedrigen Temperaturen und hoher Schlagzähigkeit erhalten. Zur Verbesserung der Härte von TPU oder der Verformbarkeit von Polybutylenterephthalat werden gemäß CA-A 1 111 984 PES-TPU-Blends hergestellt, die, bezogen auf das Gesamtgewicht, 5 bis 95 Gew.-% Polybutylenterephthalat und 95 bis 5 Gew.-% TPU enthalten. Thermoplastische Polymermischungen mit einem hohen E-Modul, einer hohen Shore-D-Härte, einem hohen Bruchdehnungswert und einem hervorragenden Kälteschlagverhalten bestehen nach Angaben der EP-A 0 334 186 aus 70 bis 95 Gew.-Teilen eines TPU, hergestellt aus einem Diisocyanat (Ba), einer Hydroxyl- oder Aminogruppen haltigen Verbindung (Bb) und einem kurzkettigen Kettenverlängerungsmittel (Bc), wobei, bezogen auf die Summe (Ba) bis (Bc) der Gewichtsanteil von (Bb) 5 bis 20 Gew.-% beträgt und das Verhältnis von NCO-Gruppen der Komponente (Ba) zu den Zerewitinoff aktiven Gruppen der Komponenten (Bb) und (Bc) in einem Bereich von 0,9 bis 1,15 liegt, und 30 bis 5 Gew.-Teilen eines thermoplastischen Terephthalsäureesters, der gegebenenfalls mit wenigstens einer weiteren thermoplastischen Komponente abgemischt ist. In der EP-A 0 420 016 (CA-A 20 24 715) werden schlagzäh modifizierte Polyurethan-Polyester-Formmassen beschrieben, die bezogen auf 100 Gew.-Teile, 30 bis 90 Gew.-Teile TPU enthalten, 5 bis 65 Gew.-Teile PES und 5 bis 30 Gew.-Teile mindestens eines Pfropfkautschuks auf der Grundlage eines Polybutadiens oder Polyacrylats. Nachteilig an diesen Formmassen ist, daß durch den Pfropfkautschukzusatz zwar ihre Kälteflexibilität beträchtlich verbessert, gleichzeitig jedoch ihre Wärmebeständigkeit vermindert wird.

Die genannten PES-TPU-Blends weisen ferner den Nachteil auf, daß, aufgrund der Verwendung von TPU mit einer Kennzahl von üblicherweise 90 bis 110, keine chemische Bindung zwischen der PES- und TPU-Phase eintritt.

Thermoplastische Werkstoffe mit erhöhter Festigkeit, erhöhtem E-Modul und verbesserter Wärmeformbeständigkeit bestehen gemäß DE-A 41 28 274 aus 99,5 bis 60 Gew.-% TPU und 0,5 bis 40 Gew.-% eines PES, die bei 180 bis 250 °C unter Zusatz von 0,05 bis 5 Gew.-% eines organischen Polyisocyanats hergestellt werden. Nachteilig an diesem Verfahren ist die hohe Konzentration von monomeren, vielfach gasförmigen Di- oder Triisocyanaten bei der Polymerblendherstellung. Das zugesetzte monomere Di- oder Triisocyanat reagiert während der Verweilzeit im z.B. Reaktionsextruder nur unvollständig ab und entweicht dampfförmig am Extruderkopf.

Die Aufgabe der vorliegenden Erfindung bestand darin, Werkstoffe mit einer sehr guten Temperaturbeständigkeit, einer hohen Elastizität und großen Beständigkeit gegen Abrieb nach einem technisch leicht handhabbaren Verfahren herzustellen.

Diese Aufgabe konnte überraschenderweise gelöst werden durch Triblockpolyadditionsprodukte auf der Grundlage eines PES und eines modifizierten TPU, bei denen die Polyesterblöcke der PES und die Hart- und Weichsegmente des TPU durch eine chemische Bindung miteinander verknüpft sind.

Gegenstand der Erfindung sind somit Polyurethan-Polyester-Triblockpolyadditionsprodukte, die erhältlich sind durch Umsetzung von
A) mindestens einem thermoplastischen Polyester, vorzugsweise Polybutylen- und/oder Polyethylenterephthalat und
B) mindestens einem thermoplastischen Polyurethan-Elastomeren, das seinerseits erhältlich ist durch Umsetzung von
   Ba) organischen Diisocyanaten mit
   Bb) Polyhydroxylverbindungen mit Molekulargewichten von 500 bis 8000 und
   Bc) Kettenverlängerungsmitteln mit Molekulargewichten kleiner als 400,
unter Anwendung einer NCO-Kennzahl (Isocyanatindex) von 116 bis 135.

Derartige erfindungsgemäß verwendbare TPU (B) besitzen vorteilhafterweise einen Gehalt an freien NCO-Gruppen von 0,5 bis 4 Gew.-% und einen Gesamtgehalt an NCO-Gruppen von 0,75 bis 5 Gew.-%, bezogen auf das Gesamtgewicht des TPU.

Gegenstand der Erfindung sind ferner ein Verfahren zur Herstellung der erfindungsgemäßen TPU-PES-Triblockpolyadditionsprodukte durch Umsetzung der PES (A) und der erfindungsgemäß verwendbaren, speziellen TPU (B) bei einer Temperatur im Bereich von 180 bis 300 °C und die Verwendung der erfindungsgemäßen TPU-PES-Triblockpolyadditionsprodukte zur Herstellung von Extrusionsprodukten, vorzugsweise von Formkörpern nach Anspruch 6.

Die erfindungsgemäßen TPU-PES-Triblockpolyadditionsprodukte bestehen aus zwei Hartphasenblöcken, der PES-Hartphase aus vorzugsweise Polybutylenterephthalat, abgekürzt auch PBT genannt, oder Polyethylenterephthalat, abgekürzt auch PET genannt, oder aus Mischungen von PBT und PET und der TPU-Hartphase, bestehend aus dem Urethanhartsegment, dem oligomeren oder polymeren Reaktionsprodukt aus einem organischen Diisocyanat und einem niedermolekularen Kettenverlängerungsmittel, vorzugsweise einem Alkandiol und/oder Dialkylenglykol und dem elastischen Urethan-Weichsegment, bestehend aus der höhermolekularen Polyhydroxylverbindung, vorzugsweise einem höhermolekularen Polyesterund/oder Polyetherdiol, die blockweise chemisch durch Urethanund/oder Amidbindungen miteinander verknüpft sind. Die Urethanoder Amidbindungen werden gebildet, einerseits aus endständigen Hydroxyl- oder Carboxylgruppen der PES und andererseits aus endständigen Isocyanatgruppen des TPU. Die erfindungsgemäßen TPU-PES-Triblockpolyadditionsprodukte zeigen eine nahezu ideale mechanische Eigenschaftskombination aus hoher Temperaturbeständigkeit, Elastizität und Abriebfestigkeit, wobei die hervorragende Langzeittemperaturbestandigkeit bei hohen Lagertemperaturen, z.B. bei 150 °C bis 170 °C insbesondere hervorzuheben ist.

Werden die PES mit entsprechenden Mengen an erfindungsgemäß verwendbaren TPU umgesetzt, so erhält man Triblockpolyadditionsprodukte mit einer hohen Temperaturbeständigkeit, hohen Reißdehnung und hohen Zähigkeit, bei denen die einzelnen Strukturblöcke chemisch gebunden sind.

Die zur Herstellung der erfindungsgemäßen TPU-PES-Triblockpolyadditionsprodukte verwendbaren PES (A) und TPU (B) entsprechen dem Stand der Technik.
A) Hierfür geeignete PES (A) werden in der Literatur beschrieben und enthalten mindestens einen aromatischen Ring gebunden in der Polykondensationshauptkette, der sich von einer aromatischen Dicarbonsäure ableitet. Der aromatische Ring kann gegebenenfalls auch substituiert sein, beispielsweise durch Halogenatome, wie z.B. Chlor oder Brom oder/und durch lineare oder verzweigte Alkylgruppen mit vorzugsweise 1 bis 4 Kohlenstoffatomen, insbesondere 1 bis 2 Kohlenstoffatomen, wie z.B. einer Methyl-, Ethyl-, iso- bzw. n-Propyl- und/oder einer n-, iso- bzw. tert.-Butylgruppe.
   Die PES (A) können hergestellt werden durch Polykondensation von aromatischen Dicarbonsäuren oder Mischungen aus aromatischen und aliphatischen und/oder cycloaliphatischen Dicarbonsäuren sowie den entsprechenden esterbildenden Derivaten, wie z.B. Dicarbonsäureanhydriden, Mono- und/oder Diestern mit zweckmäßigerweise maximal 4 Kohlenstoffatomen im Alkoholrest, mit aliphatischen Dihydroxyverbindungen bei erhöhten Temperaturen, beispielsweise von 160 bis 260 °C, in Gegenwart oder Abwesenheit von Veresterungskatalysatoren.
   Als vorzugsweise zur Anwendung kommende aromatische Dicarbonsäuren sind die Naphthalindicarbonsäuren, Isophthalsäure und insbesondere Terephthalsäure oder Mischungen dieser Dicarbonsäuren zu nennen. Sofern Mischungen aus aromatischen und (cyclo)aliphatischen Dicarbonsäuren Anwendung finden, können bis zu 10 Mol-% der aromatischen Dicarbonsäuren durch aliphatische und/oder cycloaliphatische Dicarbonsäuren mit zweckmäßigerweise 4 bis 14 Kohlenstoffatomen, wie z.B. Bernstein-, Adipin-, Azelain-, Sebacin-, Dodecandisäure und/oder Cyclohexandicarbonsäure, ersetzt werden.
   Als aliphatische Dihydroxyverbindungen kommen vorzugsweise Alkandiole mit 2 bis 6 Kohlenstoffatomen und Cycloalkandiole mit 5 bis 7 Kohlenstoffatomen in Betracht. Beispielhaft genannt seien und bevorzugt angewandt werden 1,2-Ethandiol, 1,4-Butandiol, 1,6-Hexandiol, Neopentylglykol und 1,4-Cyclohexandiol oder Mischungen aus mindestens zwei der genannten Diole.
   Als PES (A) haben sich speziell die Polyalkylenterephthalate von Alkandiolen mit 2 bis 6 Kohlenstoffatomen hervorragend bewährt, so daß bevorzugt PET und insbesondere bevorzugt PBT oder Mischungen aus PET und PBT Anwendung finden.
   Die relative Viskosität der PES (A) liegt üblicherweise im Bereich von 0,8 bis 1,8, vorzugsweise von 1,0 bis 1,8 und insbesondere 1,2 bis 1,6 gemessen in einer 0,5 gew.-%igen Lösung in einem Phenol/l,2-Dichlorbenzolgemisch im Gewichtsverhältnis 1:1 bei 25 °C.
B) Die zur Herstellung der erfindungsgemäßen TPU-PES-Triblockpolyadditionsprodukte verwendbaren TPU (B) können beispielsweise hergestellt werden durch Umsetzung von
   Ba) organischen, vorzugsweise aromatischen Diisocyanaten, insbesondere 4,4'-Diphenylmethan-diisocyanat, mit
   Bb) mindestens einer difunktionellen Polyhydroxylverbindung mit einem Molekulargewicht von 500 bis 8000, insbesondere Polyalkylenglykolpolyadipaten mit 2 bis 6 C-Atomen im Alkylenrest und Molekulargewichten von 500 bis 6000 oder Polyoxytetramethylen-glykol mit einem Molekulargewicht von 500 bis 3200 und
   Bc) mindestens einem Kettenverlängerungsmittel mit einem Molekulargewicht unter 400, vorzugsweise mit einem Molekulargewicht von 60 bis 300, insbesondere Butandiol-1,4
   in Abwesenheit oder vorzugsweise Gegenwart von
   Bd) Katalysatoren und gegebenenfalls
   Be) Zusatzstoffen
   bei erhöhten Temperaturen.

Zu den TPU-Aufbaukomponenten (Ba) bis (Bc) und gegebenenfalls (Bd) und/oder (Be) ist folgendes auszuführen:
Ba) als organische Diisocyanate (Ba) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-2-butyl-pentamethylen-diisocyanat-1,5, 2-Ethylbutylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'und/oder 2,4'-Diphenylmethan-diisocyanate, 4,4'-Diisocyanatodiphenylethan-1,2 und Gemische aus 4,4'-, 2,4'- und/oder 2,2'-Diisocyanato-diphenylethan-1,2,vorteilhafterweise solche mit einem 4,4'-Diisocyanato-diphenylethan-1,2-Gehalt von mindestens 95 Gew.-%. Vorzugsweise verwendet werden Diphenylmethan-diisocyanat-Isomerengemische mit einem 4,4'-Diphenylmethan-diisocyanatgehalt von größer als 96 Gew.-% und insbesondere im wesentlichen reines 4,4'-Diphenylmethan-diisocyanat.
   Die organischen Diisocyanate können gegebenenfalls in untergeordneten Mengen, z.B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Menge jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenylpolymethylen-polyisocyanaten, sog. Roh-MDI sowie flüssige, mit Isocyanurat-, Harnstoff-, Biuret-, Allophanat-, Urethanund/oder Carbodiimidgruppen modifizierte 4,4'- und/oder 2,4'-Diphenylmethan-diisocyanate.
   Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
Bb) Als Polyhydroxylverbindungen (B) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise 1,3-Propylenoxid, 1,2- bzw. 2,3-Butylenoxid und vorzugsweise Tetrahydrofuran, Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, N-Alkyldialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.
   Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
   Sehr gut geeignet sind insbesondere die hydroxylgruppenhaltigen Polymerisationsprodukte des Tetrahydrofurans, die Polyoxytetramethylen-glykole.
   Die im wesentlichen linearen Polyetherole besitzen Molekulargewichte von 500 bis 8000, vorzugsweise 600 bis 6000 und insbesondere 800 bis 3500, wobei die Polyoxytetramethylen-glykole bevorzugt Molekulargewichte von 500 bis 3200 insbesondere von 600 bis 2200 aufweisen. Die Polyetherole können sowohl einzeln als auch in Form von Mischungen untereinander zur Anwendung kommen.
   Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenglykole, wie z.B. Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Polyester der Kohlensäure mit den genannten mehrwertigen Alkoholen, insbesondere Alkandiolen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Polyalkylenglykolpolyadipate mit 2 bis 6 C-Atomen im Alkylenrest, wie z .B. Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterole besitzen Molekulargewichte von 500 bis 6000, vorzugsweise von 800 bis 3500.
Bc) Als Kettenverlängerungsmittel (Bc) mit Molekulargewichten kleiner als 400, vorzugsweise 60 bis 300, kommen vorzugsweise Alkandiole mit 2 bis 12 Kohlenstoffatomen, vorzugsweise mit 2, 4 oder 6 Kohlenstoffatomen und/oder Alkylenglykole, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(b-hydroxyethyl)-hydrochinon sowie Polytetramethylenglykole mit Molekulargewichten von 162 bis 378.
   Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
   Zur Herstellung von weicheren TPU (B), z.B. solchen mit einer Härte Shore A von kleiner als 95, vorzugsweise von 95 bis 75 Shore A, können beispielsweise die im wesentlichen difunktionellen Polyhydroxylverbindungen (Bb) und Alkandiole (Bc) vorteilhafterweise in Molverhältnissen von 1:1 bis 1:5, vorzugsweise 1:1,5 bis 1:4,5 verwendet werden, so daß die resultierenden Mischungen aus (Bb) und (Bc) ein Hydroxyläquivalentgewicht von größer als 200, und insbesondere von 230 bis 450 besitzen, während zur Herstellung von härteren TPU (B), z.B. solchen mit einer Härte Shore A von größer als 98, vorzugsweise von 55 bis 75 Shore D, die Molverhältnisse von (Bb):(Bc) im Bereich von 1:5,5 bis 1:15, vorzugsweise von 1:6 bis 1:12 liegen, so daß die erhaltenen Mischungen aus (Bb) und (Bc) ein Hydroxyläquivalentgewicht von 110 bis 200, vorzugsweise von 120 bis 180 aufweisen.
Bd) Die TPU (B) können in Abwesenheit und vorzugsweise in Gegenwart von Katalysatoren (Bd) hergestellt werden. Geeignete Katalysatoren, welche insbesondere die Reaktion zwischen den NCO-Gruppen der Diisocyanate (Ba) und den Hydroxylgruppen der Aufbaukomponenten (Bb) und (Bc) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren, wie z.B. Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (Bb) und Kettenverlängerungsmittel (Bc) eingesetzt.
   Neben Katalysatoren (Bd) können den Aufbaukomponenten auch Zusatzstoffe (Be) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.
   Die Zusatzstoffe (Be) können hierzu in die Aufbaukomponenten oder in die Reaktionsmischung zur Herstellung der TPU (B) eingebracht werden. Nach einer anderen Verfahrensvariante können die Zusatzstoffe (Be), jedoch mit dem PES (A) und dem TPU (B) gemischt und anschließend verschmolzen werden oder sie werden direkt der Schmelze aus PES (A) und TPU (B) einverleibt. Die zuletzt genannte Methode findet insbesondere auch Anwendung zum Einbringen der faser- und/oder teilchenförmigen Füllstoffe.
   Sofern zu den verwendbaren Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane, 1. und 2. Auflage (Carl Hanser Verlag, 1966 bzw. 1983) oder der DE-A 29 01 774 entnommen werden.
   Zur Herstellung der TPU (B) werden die Aufbaukomponenten (Ba), (Bb) und (Bc) vorzugsweise in Gegenwart von Katalysatoren (Bd) und gegebenenfalls Zusatzstoffen (Be) in solchen Mengen zur Reaktion gebracht, daß das Äquivalenzverhältnis von NCO-Gruppen der Diisocyanate zur Summe der Hydroxylgruppen der Komponenten (Bb) und (Bc) 1,16 bis 1,35:1 und insbesondere 1,20 bis 1,35:1 beträgt.
   Die erfindungsgemäß verwendbaren TPU (B) besitzen vorteilhafterweise einen Gehalt an freien NCO-Gruppen von 0,5 bis 4 Gew.-%, vorzugsweise von 1,0 bis 2,5 Gew.-% und einen Gesamtgehalt an NCO-Gruppen von 0,75 bis 5 Gew.-% vorzugsweise von 1,25 bis 3,5 Gew.-% und insbesondere 1,25 bis 3,0 Gew.-%, jeweils bezogen auf das Gesamtgewicht des TPU (B). Der Gesamtgehalt an NCO-Gruppen ist hierbei definitionsgemäß die Summe der freien NCO-Gruppen, zuzüglich den in Allophanat-, Biuret- und Uretdiongruppen gebundenen NCO-Gruppen. Die TPU können z.B. hergestellt werden nach dem Extruder- oder vorzugsweise Bandverfahren durch batchweises oder kontinuierliches Mischen der Aufbaukomponenten (Ba) bis (Bc) sowie gegebenenfalls (Bd) und/oder (Be), Ausreagierenlassen der Reaktionsmischung im Extruder oder auf einem Trägerband bei Temperaturen von 60 bis 250 °C, vorzugsweise 70 bis 150 °C und anschließendes Granulieren der erhaltenen TPU (B). Gegebenenfalls kann es zweckmäßig sein das erhaltene TPU (B), vor der Weiterverarbeitung zu den erfindungsgemäßen TPU-PES-Triblockpolyadditionsprodukten bei 80 bis 120 °C, vorzugsweise 100 bis 110 °C über einen Zeitraum von 1 bis 24 Stunden zu tempern.
   Die TPU (B) werden, wie bereits ausgeführt wurde, bevorzugt nach dem Bandverfahren hergestellt. Hierzu werden die Aufbaukomponenten (Ba) bis (Bc) und gegebenenfalls (Bd) und/oder (Be) bei Temperaturen oberhalb des Schmelzpunktes der Aufbaukomponenten (Ba) bis (Bc) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200 °C, vorzugsweise 80 bis 180 °C. In Abhängigkeit vom Diisocyanatanteil in der Reaktionsmischung wird die Reaktion durch Kühlen oder Heizen so gesteuert, daß mindestens 70 %, vorzugsweise mindestens 80 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt werden TPU (B) mit einer sehr niedrigen Schmelzviskosität bzw. einem hohen Schmelzindex erhalten.
   Zur Herstellung der erfindungsgemäßen TPU-PES-Triblockpolyadditionsprodukte können die Aufbaukomponenten PES (A) und TPU (B) in breiten Mengenverhältnissen, z.B. in PES-TPU-Mengenverhältnissen, von 95:5 bis 5:95 Gew.-Teilen variiert werden. Nach einer bevorzugten Ausführungsform enthalten oder vorzugsweise bestehen die TPU-PES-Triblockpolyadditionsprodukte, bezogen auf das Gesamtgewicht, aus
   - A): 70 bis 5 Gew.-%, vorzugsweise 50 bis 10 Gew.-% mindestens eines PES (A) und
   - B): 30 bis 95 Gew.-%, vorzugsweise 50 bis 90 Gew.-% mindestens eines TPU (B)

Die erfindungsgemäßen TPU-PES-Polyadditionsprodukte können nach beliebigen Verfahren unter Reaktionsbedingungen hergestellt werden, unter denen eine Reaktion der freien NCO-Gruppen des TPU (B) mit den Hydroxyl- und/oder Carboxylgruppen des PES (A) erfolgt. Beispielsweise können die lagerstabilen PES (A) und TPU (B) in Granulat- oder Pulverform bei Temperaturen bis ungefähr 150 °C, vorzugsweise von 0 bis 50 °C gemischt und anschließend ver chmolzen werden oder die PES (A) und TPU (B) können direkt in der Schmelze vermischt werden.

Die Herstellung der erfindungsgemäßen TPU-PES-Triblockpolyadditionsprodukte erfolgt zweckmäßigerweise bei einer Temperatur im Bereich von 180 bis 300 °C vorzugsweise von 190 bis 260 °C und insbesondere von 220 bis 245 °C und einer Verweilzeit von 1 bis 30 Minuten, vorzugsweise 2 bis 10 Minuten in beispielsweise fließfähigem, erweichtem oder vorzugsweise geschmolzenem Zustand der PES (A) und TPU (B) z.B. durch Rühren, Walzen, Kneten oder vorzugsweise Extrudieren, beispielsweise unter Verwendung von üblichen Plastifizierungsvorrichtungen, wie z.B. Brabender- oder Banburg-Mühlen, Knetern und Extrudern, vorzugsweise eines Einschnekken-, Doppelschnecken- oder Preßspritzmischextruders.

Nach dem zweckmäßigsten und daher vorzugsweise angewandten Herstellungsverfahren werden die PES (A) und TPU (B) bei Temperaturen von 220 bis 245 °C, vorzugsweise in einem Extruder, zusammengeschmolzen, der Schmelze gegebenenfalls Zusatzstoffe (Be) einverleibt und diese danach abkühlen gelassen und die erhaltenen TPU-PES-Triblockpolyadditionsprodukte zerkleinert.

Die erfindungsgemäßen TPU-PES-Triblockpolyadditionsprodukte sind, im Gegensatz zu TPU und TPU enthaltenden Polymerblends, in für Polyurethane üblichen Lösungsmitteln, wie z.B. Dimethylformamid oder Dimethylformamid-Amingemischen, im wesentlichen unlöslich. Im Gegensatz zu TPU enthaltenden Polymerblends kann das TPU nicht aus dem erfindungsgemäßen TPU-PES-Triblockpolyadditionsprodukt mit den genannten Lösungsmitteln herausgelöst werden. Neben der praktischen Unlöslichkeit der TPU-PES-Triblockpolyadditionsprodukte in den für TPU geeigneten Lösungsmitteln belegt auch der Abfall des Gehalts an freien NCO-Gruppen im Endprodukt die Reaktion zwischen PES (A) und TPU (B).

Die erfindungsgemäßen TPU-PES-Triblockpolyadditionsprodukte weisen, wie bereits dargelegt wurde, eine hohe Temperaturbeständigkeit, insbesondere Langzeittemperaturbeständigkeit, eine hohe Elastizität und Abriebfestigkeit auf und lassen sich leicht zu Formkörpern verarbeiten, wobei weder in der Schmelze noch im Formkörper eine Entmischung in die Komponenten PES und TPU eintritt.

### Beispiele

Zur Herstellung der erfindungsgemäßen TPU-PES-Triblockpolyadditionsprodukte und der TPU-PES-Blends als Vergleichsprodukte wurden die folgenden Aufbaukomponenten verwendet:

### A) Thermoplastische PES

- A1:: Polybutylenterephthalat mit endständigen Hydroxylgruppen und einer Viskositätszahl von 130 (gemessen an einer 0,5 gew.-%igen Lösung in Phenol/1,2-Dichlorbenzol im Gewichtsverhältnis 1:1 bei 25°C (Molgewicht ca. 35000).
- A2:: Polybutylenterephthalat mit endständigen Hydroxylgruppen und einer Viskositätszahl von 140, gemessen wie bei A1 beschrieben (Molgewicht ca. 40000).
- A3:: Polyethylenterephthalat mit endständigen Hydroxylgruppen und einer Viskositätszahl von 90, gemessen wie bei A1 beschrieben.

### B) Thermoplastische Polyurethan-Elastomere

### Vergleichsprodukte:

- BI:: TPU, hergestellt durch Umsetzung einer Mischung, bestehend aus
1000 Gew.-Teilen eines Polycaprolactondiols mit einem mittleren Molekulargewicht von 2000 (berechnet aus der bestimmten Hydroxylzahl),
133 Gew.-Teilen Butandiol-1,4 und
10 Gew.-Teilen 2,2'6,6' -Tetraisopropyl-diphenylcarbodiimid mit
520 Gew.-Teilen 4,4' -Diphenylmethan-diisocyanat (MDI) bei Temperaturen im Bereich von 80 bis 170 °C nach dem Bandverfahren.
Das Verhältnis von NCO-:OH-Gruppen war 1,05:1, entsprechend einer NCO-Kennzahl von 105.
- BII:: TPU, hergestellt durch Umsetzung einer Mischung, bestehend aus
1000 Gew.-Teilen eines Polyoxytetramethylen-glykols mit einem mittleren Molekulargewicht von 1000 (berechnet aus der bestimmten Hydroxylzahl), und
126 Gew.-Teilen Butandiol-1,4 mit
600 Gew.-Teilen 4,4'-MDI analog BI.
Das Verhältnis von NCO-:OH-Gruppen war 1,001:1, entsprechend einer NCO-Kennzahl von 100,1.
- BIII:: TPU, hergestellt durch Umsetzung einer Mischung, bestehend aus
1000 Gew.-Teilen eines Poly(ethandiol-butandiol-1,4-adipats) mit einem mittleren Molekulargewicht von 2000 (berechnet aus der bestimmten Hydroxylzahl),
112 Gew.-Teilen Butandiol-1,4 und
10 Gew.-Teilen 2,2',6,6'-Tetraisopropyl-diphenylcarbodiimid mit
440 Gew.-Teilen 4,4'-MDI
analog BI.

Das Verhältnis von NCO-:OH-Gruppen war 1,008:1, entsprechend einer NCO-Kennzahl von 100,8.

### Erfindungsgemäß verwendbare thermoplastische Polyurethane

- B1:: TPU, hergestellt analog den Angaben von BI, jedoch unter Verwendung von 111 Gew.-Teilen Butandiol-1,4.
Das Verhältnis von NCO-:OH-Gruppen war 1,2:1, entsprechend einer NCO-Kennzahl von 120. Das TPU besaß einen analytisch bestimmten Gehalt an freien NCO-Gruppen von 2,0 Gew.-% und einen Gesamtgehalt an NCO-Gruppen von 2,1 Gew.-%.
- B2:: TPU, hergestellt analog den Angaben von BII, jedoch unter Verwendung von 90 Gew.-Teilen Butandiol-1,4.
Das Verhältnis von NCO-:OH-Gruppen war 1,2:1, entsprechend einer NCO-Kennzahl von 120. Das TPU besaß einen analytisch bestimmten Gehalt an freien NCO-Gruppen von 1,7 Gew.-% und einen Gesamtgehalt an NCO-Gruppen von 1,9 Gew.-%.
- B3:: TPU, hergestellt analog den Angaben von BIII, jedoch unter Verwendung von 87 Gew.-Teilen Butandiol-1,4.
Das Verhältnis von NCO-:OH-Gruppen war 1,2:1, entsprechend einer NCO-Kennzahl von 120. Das TPU besaß einen Gehalt an freien NCO-Gruppen von 2,4 Gew.-% und einen Gesamtgehalt an NCO-Gruppen von 2,5 Gew.-%.
- B4:: TPU, hergestellt durch Umsetzung einer Mischung, bestehend aus
1000 Gew.-Teilen eines Poly(butandiol-1,4-adipats) mit einem mittleren Molekulargewicht von 2500 (berechnet aus der bestimmten Hydroxylzahl),
68 Gew.-Teilen Butandiol-1,4 und
10 Gew.-Teilen 2,2',6,6'-Tetraisopropyl-diphenylcarbodiimid mit
360 Gew.-Teilen 4,4'-MDI analog BI.
Das Verhältnis von NCO-:OH-Gruppen war 1,25:1, entsprechend einer NCO-Kennzahl von 125.
- B5:: TPU, hergestellt analog den Angaben von BI, jedoch unter Verwendung von 105 Gew.-Teilen Butandiol-1,4.
Das Verhältnis von NCO-:OH-Gruppen betrug 1,25:1, entsprechend einer NCO-Kennzahl von 125.
- B6:: TPU, hergestellt analog den Angaben von BII, jedoch unter Verwendung von 94 Gew.-Teilen Butandiol-1,4. Das Verhältnis von NCO-:OH-Gruppen war 1,35:1, entsprechend einer NCO-Kennzahl von 135.
- B7:: TPU, hergestellt analog den Angaben von BIII, jedoch unter Verwendung von 96 Gew.-Teilen Butandiol-1,4. Das Verhältnis von NCO-:OH-Gruppen war 1,16:1, entsprechend einer NCO-Kennzahl von 116.

### Vergleichsbeispiele I bis III und Beispiele 1 bis 9

### Verfahrensvariante 1

Zur Herstellung der erfindungsgemäßen TPU-PES-Triblockpolyadditionsprodukte bzw. TPU-PES-Blends als Vergleichsprodukte wurden die PES- und TPU-Granulate bei einer Temperatur von 23 °C intensiv gemischt, die Mischung wurde in einen Doppelschneckenextruder eingebracht, bei 220 bis 240 °C aufgeschmolzen, innerhalb einer Verweilzeit von 2 bis 5 Minuten zur Reaktion gebracht und danach in ein Wasserbad extrudiert.

Nach der Granulierung und Trocknung wurden die TPU-PES-Triblockpolyadditionsprodukte oder -Blends mit Hilfe einer Spritzgußmaschine je nach Härte bei 210 bis 235 °C zu Prüfkörpern verformt, an denen ohne weitere Nachbehandlung die Dichte nach DIN 53 479, die Härte Shore D nach DIN 53 505, die Zugfestigkeit nach DIN 53 504, die Bruchdehnung nach DIN 53 504, die Weiterreißfestigkeit nach DIN 53 515 und der Abrieb nach DIN 53 516 gemessen wurde.

Gemessen wurde ferner die Zugfestigkeit und Bruchdehnung nach einer 500 stündigen Wärmelagerung im Umluftofen bei 130 °C, 150°C und 170 °C.

### Verfahrensvariante 2

Man verfuhr analog der Verfahrensvariante 1, verwendete jedoch anstelle des Doppelschneckenextruders einen Einschneckenextruder.

### Verfahrensvariante 3

Das TPU wurde in einem Reaktionsextruder in Gegenwart des PES hergestellt.

Die Aufbaukomponenten (Ba), (Bb) und (Bc) wurden in einem hohen Äquivalenzverhältnis von NCO-:OH-Gruppen in einem Doppelschneckenextruder innig gemischt und zur Reaktion gebracht. Das gebildete TPU mit hoher NCO-Kennzahl wurde im weiteren Verlauf der Reaktion im Doppelschneckenextruder mit zudosiertem Polybutylen-terephthalat zum Triblockpolyadditionsprodukt umgesetzt.

Die Art und Menge der verwendeten PES (A) und TPU (B) und die an den Prüfkörpern gemessenen mechanischen Eigenschaften sind in den folgenden Tabellen I bis II zusammengefaßt.

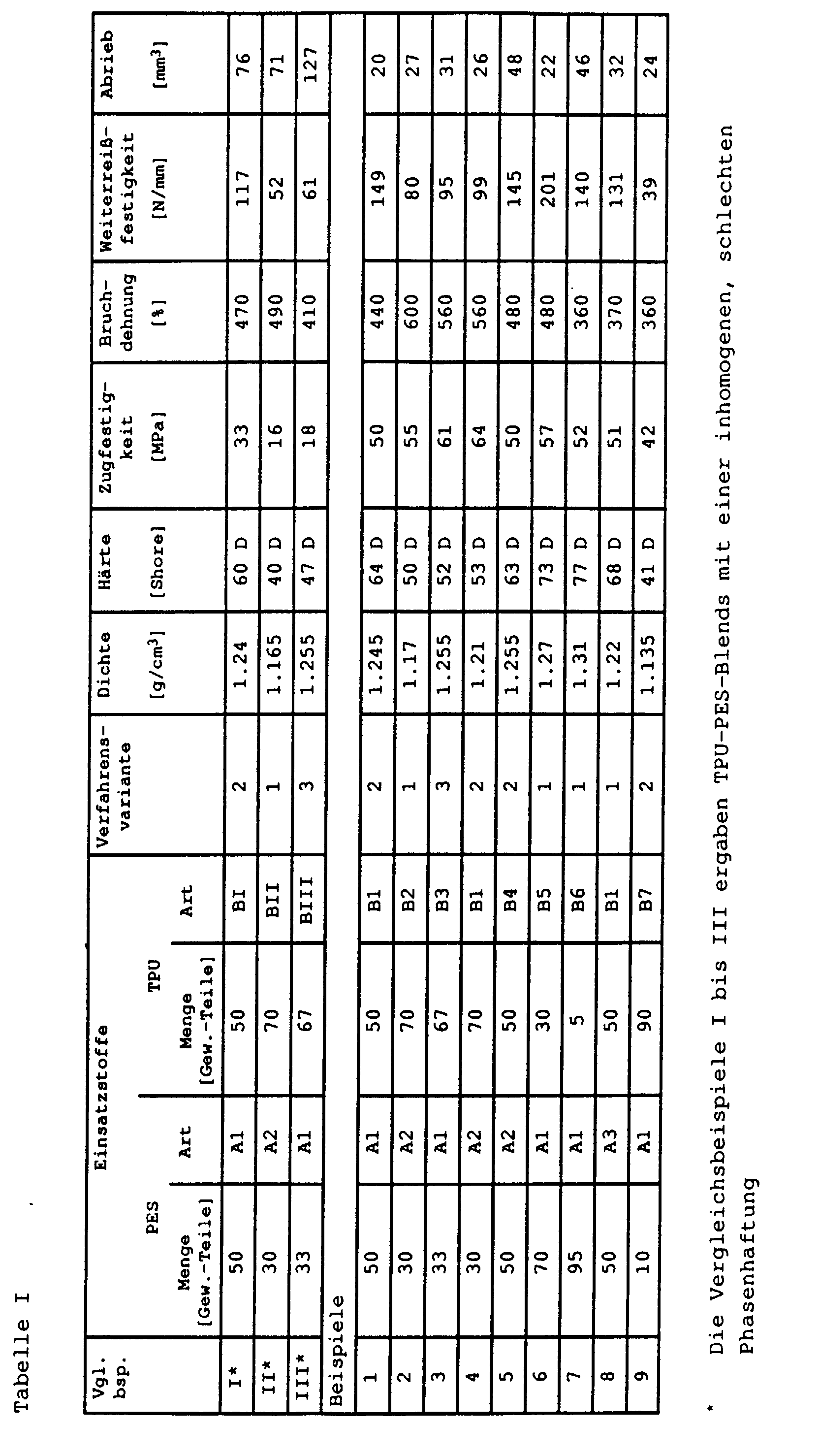

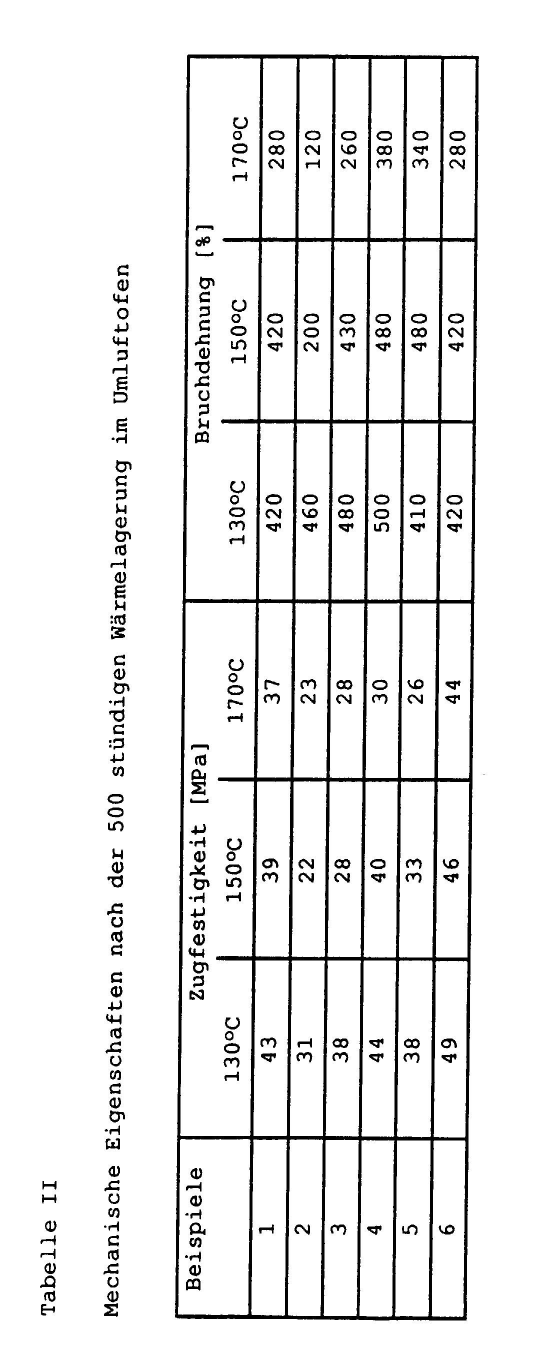

## Patentansprüche

1. Polyurethan-Polyester-Triblockpolyadditionsprodukte, erhältlich durch Umsetzung
A) mindestens eines thermoplastischen Polyesters und
B) mindestens eines thermoplastischen Polyurethan-Elastomeren, das seinerseits erhältlich ist durch Umsetzung von
Ba) organischen Diisocyanaten mit
Bb) Polyhydroxylverbindungen mit Molekulargewichten von 500 bis 8000 und
Bc) Kettenverlängerungsmitteln mit Molekulargewichten kleiner als 400
unter Anwendung einer NCO-Kennzahl von 116 bis 135.

2. PolyurethanPolyurethan-Polyester-Triblockpolyadditionsprodukte nach Anspruch 1, dadurch gekennzeichnet, daß die thermoplastischen Polyurethan-Elastomeren (B) hergestellt werden durch Umsetzung von
Ba) mindestens einem aromatischen Diisocyanat mit
Bb) mindestens einer difunktionellen Polyhydroxylverbindung mit einem Molekulargewicht von 500 bis 8000 und
Bc) mindestens einem Alkandiol mit 2 bis 12 Kohlenstoffatomen und/oder Alkylenglykol mit einem Molekulargewicht von 60 bis 300
in einem Äquivalenzverhältnis von NCO-Gruppen der aromatischen Diisocyanate (Ba) zur Summe der Hydroxylgruppen der Komponenten (Bb) und (Bc) von 1,16 bis 1,35:1,0.

3. Polyurethan-Polyurethan-Polyester-Triblockpolyadditionsprodukte nach Anspruch 1, dadurch gekennzeichnet, daß die thermoplastischen Polyurethan-Elastomeren (B) hergestellt werden durch Umsetzung von
Ba) 4,4'-Diphenylmethan-diisocyanat -diisocyanat mit
Bb) Polyalkylenglykolpolyadipaten mit 2 bis 6 C-Atomen im Alkylenrest und Molekulargewichten von 500 bis 6000 oder Polyoxytetramethylen-glykol mit einem Molekulargewicht von 500 bis 3200 und
Bc) Butandiol-1,4
in einem Äquivalenzverhältnis von NCO-:OH-Gruppen von 1,16 bis 1,35 : 1.

4. Polyurethan-Polyester-Triblockpolyadditionsprodukte nach Anspruch 1, dadurch gekennzeichnet, daß die thermoplastischen Polyester (A) eine relative Viskosität im Bereich von 0,8 bis 1,8 aufweisen, gemessen in einer 0,5 gew.-%igen Lösung in einem Phenol/l,2-Dichlorbenzolgemisch im Gewichtsverhältnis 1:1 bei 25 °C, und hergestellt werden durch Polykondensation von aromatischen Dicarbonsäuren und/oder Dicarbonsäurederivaten mit Alkandiolen mit 2 bis 6 Kohlenstoffatomen im Alkylenrest.

5. Polyurethan-Polyester-Triblockpolyadditionsprodukte nach Anspruch 1, dadurch gekennzeichnet, daß die thermoplastischen Polyester (A) bestehen aus Polyethylenterephthalat, Polybutylenterephthalat oder Mischungen davon.

6. Verwendung der Polyurethan-Polyester-Triblockpolyadditionsprodukte nach einem der Ansprüche 1 bis 5 zur Herstellung von Formkörpern.

## Claims

1. A polyurethane/polyester three-block polyadduct obtainable by reacting
A) at least one thermoplastic polyester and
B) at least one thermoplastic polyurethane elastomer which in turn is obtainable by reacting
Ba) organic diisocyanates with
Bb) polyhydroxy compounds having molecular weights of from 500 to 8000 and
Bc) chain extenders having molecular weights of less than 400
using an NCO index of from 116 to 135.

2. A polyurethane/polyester three-block polyadduct as claimed in claim 1, wherein the thermoplastic polyurethane elastomers (B) are prepared by reacting
Ba) at least one aromatic diisocyanate with
Bb) at least one bifunctional polyhydroxy compound having a molecular weight of from 500 to 8000 and
Bc) at least one alkanediol of from 2 to 12 carbon atoms or alkylene glycol having a molecular weight of from 60 to 300
in an amount such that the ratio of the number of equivalents of NCO groups of the aromatic diisocyanates (Ba) to the sum of the hydroxyl groups of the components (Bb) and (Bc) is from 1.16:1.0 to 1.35:1.0.

3. A polyurethane/polyester three-block polyadduct as claimed in claim 1, wherein the thermoplastic polyurethane elastomers (B) are prepared by reacting
Ba) diphenylmethane 4,4'-diisocyanate with
Bb) polyalkylene glycol polyadipates where the alkylene radical is of 2 to 6 carbon atoms and which have molecular weights of from 500 to 6000 or polyoxytetramethylene glycol having a molecular weight of from 500 to 3200 and
Bc) 1,4-butanediol
in an amount such that the ratio of the number of equivalents of NCO groups to that of OH groups is from 1.16:1 to 1.35:1.

4. A polyurethane/polyester three-block polyadduct as claimed in claim 1, wherein the thermoplastic polyesters (A) have a relative viscosity of from 0.8 to 1.8, measured in a 0.5% strength by weight solution in a 1:1 (w/w) phenol/1,2-dichlorobenzene mixture at 25°C, and are prepared by polycondensation of aromatic dicarboxylic acids or dicarboxylic acid derivatives with alkanediols where the alkylene radical is of 2 to 6 carbon atoms.

5. A polyurethane/polyester three-block polyadduct as claimed in claim 1, wherein the thermoplastic polyesters (A) consist of polyethylene terephthalate, polybutylene terephthalate or a mixture thereof.

6. Use of a polyurethane/polyester three-block polyadduct as claimed in any of claims 1 to 5 for the production of moldings.

## Revendications

1. Produits de polyaddition triséquencés de polyuréthanne-polyesters, que l'on obtient par mise en réaction de
A) au moins un polyester thermoplastique et
B) au moins un élastomère de polyuréthanne thermoplastique que l'on obtient, à son tour, par mise en réaction de
Ba) des diisocyanates organiques avec
Bb) des composés polyhydroxylés possédant des poids moléculaires de 500 à 8000 et
Bc) des agents d'allongement de chaînes possédant des poids moléculaires inférieurs à 400,
en utilisant un indice NCO s'élevant de 116 à 135.

2. Produits de polyaddition triséquencés de polyuréthanne-polyesters selon la revendication 1, caractérisés en ce qu'on prépare les élastomères de polyuréthanne thermoplastiques (B) par mise en réaction de
Ba) au moins un diisocyanate aromatique avec
Bb) au moins un composé polyhydroxylé difonctionnel possédant un poids moléculaire de 500 à 8000 et
Bc) au moins un alcanediol contenant de 2 à 12 atomes de carbone et/ou un alkylèneglycol possédant un poids moléculaire de 60 à 300,
dans un rapport d'équivalence des groupes NCO des diisocyanates aromatiques (Ba) à la somme des groupes hydroxyle des composants (Bb) et (Bc) de 1,16 à 1,35:1,0.

3. Produits de polyaddition triséquencés de polyuréthanne-polyesters selon la revendication 1, caractérisés en ce qu'on prépare les élastomères de polyuréthanne thermoplastiques (B) par mise en réaction de
Ba) le 4,4'-diphénylméthanediisocyanate avec
Bb) des polyadipates de polyalkylèneglycol contenant de 2 à 6 atomes de carbone dans le radical alkylène et possédant des poids moléculaires de 500 à 6000 ou encore du polyoxytétraméthylèneglycol possédant un poids moléculaire de 500 à 3200, et
Bc) le butanediol-1,4,
dans un rapport d'équivalence des groupes NCO:OH de 1,16 à 1,35:1.

4. Produits de polyaddition triséquencés de polyuréthanne-polyesters selon la revendication 1, caractérisés en ce que les polyesters thermoplastiques (A) présentent une viscosité relative dans le domaine de 0,8 à 1,8, mesurée dans une solution à 0,5% en poids dans un mélange de phénols/1,2-dichlorobenzène dans un rapport pondéral de 1:1 à 25°C, et sont préparés par polycondensation d'acides dicarboxyliques et/ou de dérivés d'acides dicarboxyliques aromatiques avec des alcane-diols contenant de 2 à 6 atomes de carbone dans le radical alkylène.

5. Produits de polyaddition triséquencés de polyuréthanne-polyesters selon la revendication 1, caractérisés en ce que les polyesters thermoplastiques (A) sont constitués par du polyéthylène-téréphtalate, par du polybutylène-téréphtalate ou encore par leurs mélanges.

6. Utilisation des produits de polyaddition triséquencés de polyuréthanne-polyesters selon l'une quelconque des revendications 1 à 5, pour la fabrication de corps moulés.
